# EUROPEAN PATENT SPECIFICATION

(11) **EP 1 804 434 B1**
(45) Date of publication and mention of the grant of the patent: **21.11.2007**
(21) Application number: 05292696.1
(22) Date of filing: 13.12.2005
(51) Int. Cl.: H04L 12/56, H04L 12/28, H04Q 7/32

(54) **Method for interworking between a 3GPP mobile communications network and a WIMAX wireless communications network operating according to the IEEE 802.16 standard**
Verfahren zum Zusammenarbeiten von einem 3GPP Mobilkommunikationsnetz und einem auf dem IEEE 802.16 Standard basierenden WIMAX-Kommunikationsnetz
Procédé pour l'interfonctionnement entre un réseau de communications mobile 3GPP et un réseau de communications WIMAX fonctionnant selon le standard IEEE 802.16

(43) Date of publication of application: 04.07.2007
(73) Proprietor: Alcatel Lucent, 75008 Paris (FR)
(72) Inventor: Fiat, Lionel, 92380 Garches (FR)
(74) Representative: Schmidt, Werner Karl

(56) References cited:
- US-A1- 2005 068 929
- US-A1- 2005 083 893
- "Universal Mobile Telecommunications System (UMTS); 3GPP system to Wireless Local Area Network (WLAN) interworking; System description (3GPP TS 23.234 version 6.5.0 Release 6)" ETSI STANDARDS, EUROPEAN TELECOMMUNICATIONS STANDARDS INSTITUTE, SOPHIA-ANTIPO, FR, no. V650, June 2005 (2005-06), pages 1-80, XP014030505 ISSN: 0000-0001
- LEI WANG, KEN STANWOOD, PHILIP BARBER, DAVID JOHNSTON: "Enhancement to the 802.16e Global Service Class Name Encoding; IEEE C802.16e-04/460r1" IEEE 802.16 BROADBAND WIRELESS ACCESS WORKING GROUP, [Online] 12 November 2004 (2004-11-12), pages 0-5, XP002378344 Retrieved from the Internet: URL:http://www.ieee802.org/16/tge/contrib/ C80216e-04_460r1.pdf> [retrieved on 2006-04-24]
- PATACHIA-SULTANOIU C: "DEPLOYING WIMAX CERTIFIED BROADBAND WIRELESS ACCESS SYSTEMS" BRITISH TELECOMMUNICATIONS ENGINEERING, BRITISH TELECOMMUNICATIONS ENGINEERING. LONDON, GB, vol. 3, no. 3, July 2004 (2004-07), pages 105-116, XP001227021 ISSN: 0262-401X

## Description

### Field of the invention

The present invention is directed to a method for signalling interworking a standardized wireless mobile communication network (WIMAX) according to IEEE 802.16 standard with a standardized cellular network technology.

WIMAX is a wireless mobile communication network using an air interface defined in IEEE 802.16 standard and shall provide world wide interoperability for microwave access.

It is desirable to find a solution for interworking the WIMAX standardized wireless mobile communication network with a standardized cellular network such as a 3GPP network or other cellular network technologies, for instance 3GPP 2, so that the interworking is matched as much as possible to the WIMAX context considering the already existing standardized solution such as 3GPP WLAN interworking from 3GPP. Notably, 3GPP is an abbreviated term designating a network according to the third Generation Partnership Project, an international consortium which is defining most mobile network technologies, including GSM, EDGE and UMTS.

3GPP is disclosed in 3^{rd} Generation Partnership Project, Technical Specification Group Services and System Aspects, 3GPP system to Wireless Local Area Network (WLAN) interworking, System description (Release 6) 3GPP TS 23.234 V6.5.0 (2005-6).

The best already existing standardized solution is to just reuse the solution for R6 3GPP WLAN interworking: VPN like tunnels from user equipment (UE) to a packet data gateway (PDG). It should been mentioned that VPN like tunnels are tunnels as the ones used in virtual private networks. R6 3GPP WLAN IW is the release 6 of the 3GPP standard which sets the wireless LAN-3GPP network interworking so that both types of networks are enabled to interwork.

It is also envisaged to implement the user equipment role from R6 3GPP WLAN IW solution in the network (in the WIMAX core network) but tunnelling between the terminal and the core network entity which emulates the UE role is not solved.

To reuse the R6 3GPP WLAN IW solution, that is to use VPN like tunnels from UE to PDG is not well matched to the WIMAX context; as UE to PDG tunnels are IKEv2 + IPSec. IKE denotes the internet key exchange which is an EPSec (internet protocol security) standard protocol used to ensure security for virtual private network negotiation and remote host on network exchange access, IKEv2 being the second version of IKE. This prior art solution is not good enough since IKEv2 does cyclic keep alive which will forbid the WIMAX terminal to enter in the idle mode; more signalling of a radio and more terminal power consumption are inevitable.

Further, using IPSec is not practical since:
- WIMAX already offers a secured end-to-end solution; upper IPSec encryption/integrity over WIMAX is unuseful and will induce overhead over the WIMAX radio link;
- Unuseful IPSec will require more CPU in the terminal (and the network).

### Object of the invention

Therefore, it is an object of the present invention to provide a method for signalling interworking a standardized WIMAX network according to IEEE 802.16 standard with a standardized cellular network technology so that this interworking is matched as good as possible to the WIMAX context considering the already existing standardized solutions.

### Short description of the invention

To solve the above object the inventor had the idea not to provide the complete end-to-end solution for 3GPP WIMAX interworking but a part of the solution and proposes an interoperable and standardizable solution to signal from a WIMAX terminal to a WIMAX network: the different tunnels dedicated to interwork with a 3GPP network.

The solution consists in adding in a global service class name according to the IEEE 802.16 standard a specific string for interworking service flow, the specific string being adapted to signal to a base station of the WIMAX network a service flow to be routed to the standardized cellular network. This solution enables as in 3GPP packet domain with PDP activation, the UE to signal to the APN (PDN to be connected) that it wants to be linked over WIMAX. The specific string is added to a global service class name according to the IEEE 802.16 standard, which is the common standard for WIMAX networks. The specific string is preferably concatenated to the specific fields defined in the IEEE 802.16 standard, and can be identified by the WIMAX base station by its position in the global service class name. Of course, it is desirable to have the specific string standardized by the IEEE or WIMAX .

According to a preferred embodiment, the standardized cellular network is a network according to the third Generation Partnership Project (3GPP). Therein the service flow has a function equivalent to a tunnel so that advantageously two service flows are completely distinguishable between the terminal and the base station of the WIMAX network.

In the preferred embodiment according to the present invention, the addition of the specific string in the global service class name is carried out by concatenating
**"_" +3GPP+ "_" +APN (+ "_" + other/optional specific 3GPP parameters)**
wherein APN designates an access point node routing information for serving support nodes and gateway support nodes in a 3GPP network. This means that the service flow is an interworking service flow and it will be routed behind the base station to the 3GPP network. The specific string corresponds to the PDN naming used in 3GPP. This solution enables as in 3GPP packet domain the user equipment to signal the access point node APN that it wants to be linked over WIMAX network. Other /Optional 3GPP specific parameters may be eventually added by concatenation in the global service class name.

The invention is also realized in a global service class name according to the IEEE 802.16 standard comprising a specific string as described above.

The advantage of the method and global service class name according to the present invention is that interworking of 3GPP-WIMAX is carried out in a WIMAX network, resulting in:
- no cyclic keep alive over WIMAX radio link which forbids the terminal to enter in the ideal mode, and no unuseful IPSec over WIMAX radio links.

Before describing the specific method according to the present invention, in the following definitions of service class and service class name according to IEEE 802.16d standard are given:

### - Service class definition:

*"The service class serves the following purposes:*
*a) It allows operators who so wish to move the burden of configuring service flows from the provisioning server to the base station. Operators provide the single subscribers with the service class name; the implementation of the name is configured at the base station. This allows operators to modify the implementation of a given service to local circumstances without changing single subscriber provisioning. For example some scheduling parameters may need to be treated differently for two different base stations to provide the same service. As another example, service profiles could be changed by time of day.*
*b) It allows higher layer protocols to create a service flow by its service class name. For example telephone signalling may direct the single subscriber to instantiate any available provisioned service flow of class "G711 "."*

### - Service class name definition:

*"Length: 2 to 128 bytes;*

*Value Null terminated string of ASCII characters. The length of the string, including null-terminator may not exceed 128 bytes"."*

Further IEEE 802.16e includes:

### - Service class/global service flows definition:

*"Mobile networks require common definitions of service class names and associated authorized QoS parameter sets in order to facilitate operation across a distributed topology.*

*Global service class names shall be supported to enable operation in this context."*

### - Global service class name definition:

*"Global service class names are a rules-based naming system, whereby the global service class name itself contains referential QoS parameter codes. "*

To be noted: QoS parameters specify the quality of service parameters and are used to differentiate telecommunication services based on measurable parameters evaluated or controlled via network monitoring.

*"A global service class name is a rules-based composite name parsed in eight information fields of the format: ISBRLSPTR, elements reference extensible look up tables. Each information field place holder must be an expressed value obtained from table 122a as part of the name and may not be omitted."*
*"I field: uplink*/*downlink indicator (1 bit):*
*S field: maximum sustained traffic rate (6 bits) with type length value: Total size = 6 bytes + 8 bytes .*
*B field: maximum traffic burst (6 bytes) with type length value: Total size is 6 bits + 8 bytes*
*R field: maximum reserved traffic rate (6 bytes) with type length value: Total size is 6 bytes + 8 bytes*
*L field: maximum latency (6 bytes) with type length value: Total size is 6 bytes + 4 bytes*
*S field: fixed length versus variable length SDU indicator (I bit)*
*P field: Paging preference (1 bit)*
*T field: Traffic indication preference (1 bit)*
*R field: Reserved (4 bytes)"*

The maximum possible total size of a global service class name defined in IEEE 802.16e is 32 bytes (maximum possible global service class name is 128 bytes).

### Preferred embodiment:

The solution for carrying out the method according to the present invention consists in adding in a global service class name (free space is available) a specific string for interworking service flows. By concatenating
**"_" +3GPP+ "_" + APN"(+ "_" + other/optional specific 3GPP parameters)**

This means that this service flow is an interworking service flow and it will be routed behind the base station to the 3GPP network. Thus, the specific string is adapted to signal from a WIMAX terminal to a base station of the WIMAX network the service flow to be routed to the standardized cellular network.

This solution enables as in 3GPP packet domain with PDP activation the user equipment to signal the access point node (APN) that it wants to be linked over the WIMAX network.

## Claims

1. A method for signalling interworking a standardized wireless mobile communication network WIMAX according to the IEEE 802.16 standard with a standardized cellular network technology, said method comprising the step of:
- adding in a global service class name according to the IEEE 802.16 standard a specific string for interworking service flow, the specific string being adapted to signal to a base station of the WIMAX network a service flow to be routed to the standardized cellular network.

2. The method according to claim 1, wherein said standardized cellular network is a network according to the third Generation Partnership Project 3GPP.

3. The method according to claim 1, wherein said service flow has a function equivalent to a tunnel, such that two service flows between a terminal and the base station of the WIMAX network are completely distinguishable.

4. The method as claimed in claim 1, wherein the addition of the specific string in the global service class name is carried out by concatenating
**"_"+ 3GPP +"_"+ APN**
wherein 3GPP designates a network according to the third Generation Partnership Project and APN designates an access point node routing information for serving Support Nodes and Gateway Support Nodes in a 3GPP network.

5. The method according to claim 4, wherein further 3GPP specific parameters are concatenated to the global service class name.

6. Global service class name according to the IEEE 802.16 standard comprising: a specific string for signalling interworking a standardized wireless mobile communication network WIMAX according to the IEEE 802.16 standard with a standardized cellular network technology, the specific string being adapted to signal to a base station of the WIMAX network a service flow to be routed to the standardized cellular network.

7. Global service class name according to claim 6, wherein the specific string is concatenated to the Global service class name and consists of
**"_"+ 3GPP +"_"+ APN,**
wherein 3GPP designates a network according to the third Generation Partnership Project and APN designates an access point node routing information for serving Support Nodes and Gateway Support Nodes in a 3GPP network.

## Patentansprüche

1. Verfahren zur Signalanbindung eines standardisierten kabellosen Mobil-Kommunikationsnetzwerks WIMAX gemäß dem Standard IEEE 802.16 mit einer standardisierten zellenorientierten Netzwerktechnologie, wobei dieses Verfahren den folgenden Schritt umfasst:
- Hinzufügen einer spezifischen Zeichenfolge für den Anbindungs-Dienstablauf zu einem globalen Dienstklassennamen gemäß dem IEEE 802.16 Standard, wobei die spezifische Zeichenfolge zur Signalisierung eines Dienstablaufs, der an ein standardisiertes zellenorientiertes Netzwerk weitergeleitet werden soll, an eine Basisstation des WIMAX-Netzwerks angepasst ist.

2. Verfahren gemäß Anspruch 1, wobei dieses standardisierte zellenorientierte Netzwerk ein Netzwerk gemäß dem Third Generation Partnership Project (3GPP) ist.

3. Verfahren gemäß Anspruch 1, wobei dieser Dienstablauf eine Funktion hat, die der eines Tunnels entspricht, so dass zwei Dienstabläufe zwischen einem Endgerät und der Basisstation des WIMAX-Netzwerks vollständig unterschieden werden können.

4. Verfahren gemäß Anspruch 1, wobei das Hinzufügen der spezifischen zeichenfolge im globalen Dienstklassennamen durch Verketten von
**"_"+3GPP+"_"APN**
erfolgt, wobei 3GPP ein Netzwerk gemäß dem "Third Generation Partnership Project" bezeichnet und wobei APN einen Zugangspunkt-Knoten kennzeichnet, der Informationen weiterleitet zur Versorgung der Support-Knoten und der Gateway-Support-Knoten in einem 3GPP-Netzwerk.

5. Verfahren gemäß Anspruch 4, wobei dem globalen Dienstklassennamen des Weiteren 3GPP-spezifische Parameter durch Verketten hinzugefügt werden.

6. Globaler Dienstklassenname gemäß dem IEEE 802.16 Standard, der Folgendes umfasst:
eine spezifische Zeichenfolge zur Signalanbindung eines standardisierten kabellosen Mobil-Kommunikationsnetzwerks WIMAX gemäß dem IEEE 802.16-Standard mit einer standardisierten zellenorientierten Netzwerktechnologie, wobei die spezifische Zeichenfolge so angepasst ist, dass sie einen Dienstablauf, der an das standardisierte zellenorientierte Netzwerk weitergeleitet werden soll, an eine Basisstation des WIMAX-Netzwerks signalisiert.

7. Globaler Dienstklassenname gemäß Anspruch 6, wobei die spezifische Zeichenfolge mit dem globalen Dienstklassennamen verkettet ist und
**"_"+3GPP+"_"+APN**
umfasst, wobei 3GPP ein Netzwerk gemäß dem "Third Generation Partnership Project" bezeichnet und wobei APN einen Zugangspunkt-Knoten kennzeichnet, der Informationen weiterleitet zur Versorgung der Support-Knoten und der Gateway-Support-Knoten in einem 3GPP-Netzwerk.

## Revendications

1. Procédé de signalisation de l'interfonctionnement d'un réseau de communication mobile sans fil normalisé WIMAX selon la norme IEEE 802.16 avec une technologie de réseau cellulaire normalisée, ledit procédé comprenant les étapes suivantes :
- Ajout d'une chaîne spécifique dans un nom de classe de service global selon la norme IEEE 802.16 pour le flux de service d'interfonctionnement, la chaîne spécifique étant conçue pour signaler à une station de base du réseau WIMAX un flux de service à acheminer vers le réseau cellulaire normalisé.

2. Procédé selon la revendication 1, ledit réseau cellulaire normalisé étant un réseau conforme au projet de partenariat de 3^{ème} génération 3GPP.

3. Procédé selon la revendication 1, ledit flux de service ayant une fonction équivalente à un tunnel de sorte que deux flux de service entre un terminal et la station de base du réseau WIMAX peuvent être parfaitement distingués.

4. Procédé selon la revendication 1, l'ajout d'une chaîne spécifique dans le nom de classe de service global étant réalisé en concaténant
«_ » + 3GPP+ « _ » + APN
où 3GPP désigne un réseau conforme au projet de partenariat de 3^{ème} génération et APN désigne un noeud de point d'accès acheminant des informations pour les noeuds supports de service et les noeuds supports de passerelle dans un réseau 3GPP.

5. Procédé selon la revendication 4, les autres paramètres spécifiques 3GPP étant concaténés en le nom de classe de service global.

6. Nom de classe de service global selon la norme IEEE 802.16 comprenant une chaîne spécifique pour signaler l'interfonctionnement d'un réseau de communication mobile sans fil normalisé WIMAX selon la norme IEEE 802,16 avec une technologie de réseau cellulaire normalisée, la chaîne spécifique étant conçue pour signaler à une station de base du réseau WIMAX un flux de service à acheminer vers le réseau cellulaire normalisé.

7. Nom de classe de service global selon la revendication 6, la chaîne spécifique étant concaténée en le nom de classe de service global et se composant de
« _ »+3GPP+«_»+APN
où 3GPP désigne un réseau conforme au projet de partenariat de 3^{ème} génération et APN désigne un noeud de point d'accès acheminant des informations pour les noeuds supports de service et les noeuds supports de passerelle dans un réseau 3GPP.
